# EUROPÄISCHE PATENTANMELDUNG

(11) **EP 4 447 241 A1**
(43) Veröffentlichungstag der Anmeldung: **16.10.2024**
(21) Anmeldenummer: 24161627.5
(22) Anmeldetag: 06.03.2024
(51) Int. Cl.: H02G 3/06

(54) **LANGGUTDURCHFÜHRUNG SOWIE ANORDNUNG UMFASSEND EINE SOLCHE LANGGUTDURCHFÜHRUNG UND EINE INSTALLATIONSDOSE**

(30) Priorität: 12.04.2023 DE 202023101826 U
(71) Anmelder: OBO Bettermann Hungary Kft., 2347 Bugyi (HU)
(72) Erfinder: Karaway, Dániel, 8600 Siofok (HU); Danyis, Támas, 2370 Dabas (HU); Gyula, Kardos, 2347 Bugyi (HU)
(74) Vertreter: Haverkamp Patentanwälte PartG mbB

(57) **Zusammenfassung**

Die Erfindung betrifft eine Langgutdurchführung, insbesondere Kabeldurchführung, umfassend einen einen Langgutkanal 8 einfassenden Anschlussstutzen 2 mit einem durch eine Öffnung 21 einer Wand 22 einer Installation, etwa einer Installationsdose, durchsteckbaren Endabschnitt 3, ausgerüstet mit zumindest einer Widerlagerkontur 6, die durch zumindest eine in Richtung zu dem Spannkörper 12 weisend ausgestellte Stirnseite einer in radialer Richtung von einem durch den Langgutkanal 8 hindurchgeführten Langgut 23 beabstandeten Rastzunge 4, bereitgestellt ist, welche Widerlagerkontur 6 bei durch die Wandöffnung 21 durchgestecktem Endabschnitt 3 wandinnenseitig abgestützt ist, und umfassend Mittel zum Halten des mit der zumindest einen Widerlagerkontur 6 seiner Rastzunge 4 wandinnenseitig abgestützten Anschlussstutzens 2 an der Wand 22.

Besonderes Kennzeichen ist, dass auf dem Anschlussstutzen 2 ein in Längserstreckung desselben translatorisch verstellbarer Spannkörper 12 mit einer in Richtung zu dem freien Ende 5 des Endabschnittes 3 weisenden Klemmfläche sitzt, und dass die Langgutdurchführung 1 über zumindest ein Kraftspeicherelement 11 verfügt, durch das der Spannkörper 12, unter Vorspannung stehend, bei an der Installation montierter Langgutdurchführung 1 gegen die Wandaußenseite wirkt und gegen welche Rückstellkraft der Spannkörper 12 translatorisch gegenüber dem Anschlussstutzen 2 verstellbar ist.

## Beschreibung

Die Erfindung betrifft eine Langgutdurchführung, insbesondere Kabeldurchführung, umfassend einen einen Langgutkanal einfassenden Anschlussstutzen mit einem durch eine Öffnung einer Wand einer Installation, etwa einer Installationsdose, durchsteckbaren Endabschnitt, ausgerüstet mit zumindest einer Widerlagerkontur, die durch zumindest eine in Richtung zu dem Spannkörper weisend ausgestellte Stirnseite einer in radialer Richtung von einem durch den Langgutkanal hindurchgeführten Langgut beabstandeten Rastzunge bereitgestellt ist, welche Widerlagerkonturbei durch die Wandöffnung durchgestecktem Endabschnitt wandinnenseitig abgestützt ist, und umfassend Mittel zum Halten des mit der zumindest einen Widerlagerkontur seiner Rastzunge wandinnenseitig abgestützten Anschlussstutzens an der Wand. Ferner betrifft die Erfindung eine Anordnung umfassend eine solche Langgutdurchführung und eine Installationsdose.

Bei elektrischen, elektrotechnischen und/oder elektronischen Installationen werden Installationsdosen unterschiedlicher Art zum Aufnehmen von elektrischen und/oder elektronischen Komponenten eingesetzt. Derartige Installationsdosen verfügen über Ausbrechöffnungen, die geöffnet werden, wenn ein Langgut, beispielsweise ein Kabel oder ein Kabelrohr in das Innere der Installationsdose geführt werden soll. In eine solche Installationsdose hineingeführte beziehungsweise darin eingreifende Langgüter, insbesondere wenn es sich hierbei insbesondere um ein Kabel handelt, benötigen in aller Regel eine Zugentlastung, damit ein auf das Kabel wirkender Zug nicht auf die Anschlüsse oder Kontaktierungen des Kabels beziehungsweise seiner Leiter innerhalb der Installationsdose wirken. Zu diesem Zweck sind Langgutdurchführungen entwickelt worden, die an einer Installationsdose montiert werden und in denen ein durch die Langgutdurchführung durchgeführtes Langgut, beispielsweise ein Kabel, für die Zwecke einer Zugentlastung verklemmt werden kann. Eine solche Langgutdurchführung verfügt über einen einen Langgutkanal einfassenden Anschlussstutzen. Der Langgutkanal dient zum Durchführen eines Langgutes. Ein solcher Anschlussstutzen verfügt über einen Endabschnitt, der in eine geöffnete Ausbrechöffnung einer Installationsdose als beispielhafte Installation eingeführt werden kann. Dieser Endabschnitt ist mit Rastzungen ausgerüstet, deren Nachgiebigkeit genutzt wird, um die Rastzungen mit ihrer Widerlagerkontur im Zuge eines Durchsteckens dieses Endabschnittes durch die Öffnung wandinnenseitig anordnen zu können. Die sich mit ihren Widerlagerkonturen wandinnenseitig abstützenden Rastzungen bilden das wandinnenseitige Widerlager für die vorgesehene Verspannung der Langgutdurchführung an der Wand der Installationsdose. Zum Verspannen der Langgutdurchführung mit der Installationsdose verfügt diese über Mittel zum Verspannen beziehungsweise Festsetzen des Anschlussstutzens an der Wand. Als Spannmittel dienen Muttern, die mit ihrem Innengewinde ein auf der äußeren Mantelfläche des Anschlussstutzens in axialer Richtung benachbart zu den Rastzungen angeordnetes Außengewinde kämmt. Die zu den Rastzungen weisende Seite einer solchen Spannmutter wird als Klemmfläche genutzt. Wird die Spannmutter angezogen, wirkt diese mit ihrer Klemmfläche gegen die Wandaußenseite, wodurch in Zusammenwirkung mit dem wandinnenseitigen Widerlager die Langgutdurchführung mit der Wand verspannt ist. Wenn eine Abdichtung zwischen der Langgutzuführung und der Wand der Installationsdose erforderlich ist, wird zwischen der Klemmfläche der Spannmutter und der Wandaußenseite ein Dichtring angeordnet.

Vorbekannt sind Langgutdurchführungen dieser Art beispielsweise aus EP 1 710 886 B1, EP 2 240 987 B1, EP 2 225 811 B1 oder EP 4 060 838 A1.

Bei diesen vorbekannten Langgutdurchführungen ist es zur Montage derselben in beziehungsweise an einer Wandöffnung erforderlich, die Spannmuttern nach Einsetzen des Endabschnittes in die Öffnung einer Wand mittels eines Werkzeuges, typischerweise einer Zange oder eines Maulschlüssels, zu spannen. Die Spannmuttern vorbekannter Langgutdurchführungen verfügen zu diesem Zweck über eine entsprechend konturierte außenseitige Drehmitnahme, ausgelegt nach Art eines Sechskants.

An dem dem Endabschnitt mit seinen Rastzungen gegenüberliegenden Endabschnitt des Anschlussstutzens befindet sich ein Klemmabschnitt mit in radialer Richtung verstellbaren Klemmlamellen. Diese dienen dem Zweck, ein durch den Langgutkanal des Anschlussstutzens hindurchgeführtes Langgut kraftschlüssig mit diesem zu verbinden. Die Klemmlamellen wirken in radialer Richtung auf das durch den Klemmabschnitt geführte Langgut. Um diese in radialer Richtung zu verstellen, dient ein Stellkörper. Dieser ist als Überwurfmutter konzipiert. Da der Anschlussstutzen an der Wand der Installationsdose festgesetzt ist, ist ein in dem Klemmabschnitt des Anschlussstutzens kraftschlüssig aufgenommenes Langgut mit der gewünschten Zugentlastung an die Installationsdose angeschlossen.

Bei solchen Langgutdurchführungen ist darauf zu achten, dass beim Aufschrauben der Überwurfmutter zum Aktivieren der Klemmlamellen die Verspannung der Spannmutter mit der Wand nicht gelockert wird. Überdies eignen sich diese vorbekannten Langgutdurchführungen, wenn ein abgedichteter Anschluss derselben an die Wand einer Installationsdose gewünscht wird, nur zum Anschließen an ebenen Wänden einer Installationsdose. Typischerweise sind Installationsdosen, wie diese für elektrische, elektrotechnische und/oder elektronische Unterputzinstallationen eingesetzt werden, solche mit einer zylindrischen, also außenseitig gekrümmten Wand. Wird die Klemmfläche einer solchen Spannmutter zum Festsetzen des Anschlussstutzens an die Krümmung der Wand einer solchen Installationsdose angepasst, kann diese nicht mehr gespannt werden.

Aus DE 198 28 059 A1 ist eine Langgutdurchführung mit einem durch Schlitze in Haltezungen aufgeteilten Befestigungsvorsprung bekannt. Gemäß einem in diesem Dokument beschriebenen Ausführungsbeispiel dient eine Anschlaghülse zum Verspannen der Langgutdurchführung an der Außenseite einer Durchbrechung einer Installation. Die zum Spannen benötigte Kraft resultiert aus einer Druckfeder, die an einem Stützwiderlager des Anschlussstutzens abgestützt ist. Auf diese Weise ist die Anschlaghülse in längsaxialer Richtung des Anschlussstutzens translatorisch gegenüber diesem bewegbar. Das Spannwiderlager zum Verspannen der Langgutdurchführung an der Lochrandeinfassung einer Installation wird bei dieser Langgutdurchführung durch die die Öffnung in der Installationsdose durchgreifenden Befestigungsvorsprünge bereitgestellt. Die Befestigungsvorsprünge verfügen über eine in Richtung zu der Schlaghülse geneigte Stellfläche, die an der Lochinnenrandkante anliegt. Damit wirkt die Lochrandinnenkante unter Vorspannung stehend auf die Stellschrägen der Befestigungsvorsprünge, wodurch diese in radialer Richtung nach innen verstellt werden. Die Befestigungsvorsprünge tragen endseitig jeweils eine nach innen abragende Klaue. Infolge der Spannkraft wirken die Klauen der Befestigungsvorsprünge gegen die Mantelfläche eines durch die Langgutdurchführung geführten Langgutes. Die Befestigungsvorsprünge dienen daher sowohl den Zweck des Bereitstellens eines wandinnenseitigen Widerlagers an der Lochrandinnenkante sowie einer Langgutverklemmung zum Erzielen der gewünschten Auszugsicherung. Diese vorbekannte Langgutdurchführung ist, damit die notwendige Spannkraft zum Verspannen der Langgutdurchführung an der Wand einer Installationsdose und zugleich eine ausreichende Langgutverklemmung gegeben ist, nur für den Einsatz an Wänden mit einer sehr eng tolerierten Wanddicke und einem durch die Langgutdurchführung durchzuführenden Langgutes mit einem definierten Durchmesser einsetzbar. Ist der Langgutdurchmesser zu klein, kann unter Umständen die Langgutdurchführung aus der Öffnung der Wand der Installation wieder herausgezogen werden. Daher eignet sich diese Langgutdurchführung nicht für solche Anwendungen, bei denen beispielsweise der Durchmesser des durchzuführenden Langgutes unterschiedlich sein kann und/oder wenn die Langgutdurchführung sich zum Anschließen an Installationen mit unterschiedlichen Wanddicken eignen soll.

Ausgehend von diesem diskutierten Stand der Technik liegt der Erfindung daher die Aufgabe zugrunde, eine Langgutdurchführung der eingangs genannten Art dergestalt weiterzubilden, dass nicht nur ein sicheres Widerlager wandinnenseitig bereitgestellt und eine Montage an einer Installation, etwa einer Installationsdose, vereinfacht ist, sondern dass eine solche Langgutdurchführung auch für einen Anschluss an Installationsdosen mit gekrümmten Wänden ausgelegt werden kann.

Gelöst wird diese Aufgabe erfindungsgemäß durch eine Langguteinführung der eingangs genannten Art, bei der auf dem Anschlussstutzen ein in Längserstreckung desselben translatorisch verstellbarer Spannkörper mit einer in Richtung zu dem freien Ende des Endabschnittes weisenden Klemmfläche sitzt, und dass die Langgutdurchführung über zumindest ein Kraftspeicherelement verfügt, durch das der Spannkörper, unter Vorspannung stehend, bei an der Installation montierter Langgutdurchführung gegen die Wandaußenseite wirkt und gegen welche Rückstellkraft der Spannkörper translatorisch gegenüber dem Anschlussstutzen verstellbar ist.

Bei dieser Langgutdurchführung sitzt der Spannkörper auf dem Anschlussstutzen und ist gegenüber diesem translatorisch in Richtung der axialen Erstreckung des Anschlussstutzens verstellbar. Dieses bedeutet, dass der Spannkörper, der mit seiner zur Wandaußenseite weisenden Klemmfläche mit der Wand der Installation verspannt wird, in Richtung der Längserstreckung gegenüber dem Anschlussstutzen verschoben werden kann. Ferner verfügt diese Langgutdurchführung über zumindest ein Kraftspeicherelement, das auf den Spannkörper wirkt und durch dessen auf den Spannkörper wirkende Vorspannung der Spannkörper gegen die Wandaußenseite der Installation wirkt. Die Langgutdurchführung ist eingerichtet, damit der Spannkörper mit seiner Klemmfläche gegen die Außenseite der Wand wirkt, durch dessen Öffnung der Endabschnitt mit seinen Rastzungen hindurchgeführt ist. Somit ist die Langgutdurchführung durch das Zusammenwirken der durch zumindest einen Widerlagerkontur des Anschlussteils und der durch den Spannkörper aufgebrachten Klemmkraft an der Installation gehalten, und zwar in Auszugsrichtung durch den Hintergriff der zumindest einen Widerlagerkontur zugentlastet. Die Spannkraft resultiert bei dieser Langgutdurchführung aus der in dem zumindest einem Kraftspeicherelement gespeicherten Kraft. Bei an der Wand einer Installation montierter Langgutdurchführung kann der Spannkörper gegen die Rückstellkraft des zumindest einen Kraftspeicherelementes auf dem Anschlussstutzen von der Wandaußenseite weggerichtet verstellt werden. Typischerweise ist die Langgutdurchführung so eingerichtet, dass der Spannkörper auch wenn die Langgutdurchführung nicht an eine Installation angeschlossen ist, unter Vorspannung steht und gegen die zumindest eine Widerlagerkontur wirkt. Die Höhe der Vorspannkraft wird durch die Auslegung des oder der Kraftspeicherelemente bereitgestellt. Typischerweise verfügt der Endabschnitt des Anschlussstutzens über mehrere mit Winkelabstand zueinander angeordnete Widerlagerkonturen, typischerweise mit gleichem Winkelabstand zueinander angeordnet. Die zumindest eine Widerlagerkontur wird durch die von der übrigen Mantelfläche des Anschlussstutzens abragende, zum Spannelement weisende Stirnseite einer Rastzunge bereitgestellt.

Zur Montage einer solchen Langgutdurchführung an eine Installation braucht lediglich der Endabschnitt mit den Rastzungen durch die Wandöffnung hindurchgeführt zu werden, bis die typischerweise mehreren Rastzungen mit ihrer Widerlagerkontur die Wandöffnung hintergreifen. Da in dieser Stellung der Spannkörper durch das oder die Kraftspeicherelemente unter Vorspannung stehend gegen die Außenseite der Wand wirkt, ist die Langgutdurchführung, ohne einen Einsatz eines Werkzeuges erforderlich zu machen, an der Installation, beispielsweise einer Installationsdose festgelegt.

Zum Bereitstellen einer Zugentlastung für das an die Langgutdurchführung angeschlossene bzw. durchgreifende Langgut verfügt die Langgutdurchführung über entsprechende Mittel, die eingerichtet sind, um das Langgut in axialer Richtung bezüglich des Anschlussstutzens kraftschlüssig an diesen anzuschließen. Hierbei kann es sich um einen zumindest einen Klemmkörper aufweisenden Klemmabschnitt handeln, bei dem mittels eines Stellkörpers dieser zumindest eine Klemmkörper in radialer Richtung zum Einklemmen eines durch den Anschlussstutzen geführten Langgutes verstellbar ist. Handelt es sich bei dem Langgut um ein Rohr, kann dieses auch an den dem Endabschnitt mit seiner zumindest einen Rastzunge gegenüberliegenden Endabschnitt angeschlossen werden.

Da bei der Montage dieser Langgutdurchführung an einer Wand einer Installation der Spannkörper nicht rotatorisch wie bei einer Spannmutter, sondern lediglich translatorisch verstellt wird, kann die Klemmfläche des Spannkörpers gekrümmt, typischerweise konkav gekrümmt sein, wenn die Langgutanführung an einen entsprechend gekrümmten Abschnitt einer Installationsdose, beispielsweise einen zylindrisch gekrümmten Wandabschnitt spaltfrei angeschlossen werden. Der Krümmungsradius der Klemmfläche des Spannkörpers ist bei einer solchen Ausgestaltung an den Krümmungsradius des Wandabschnittes der Installation angepasst. Auf diese Weise wirkt die Klemmfläche des Spannkörpers umfänglich in Bezug auf die Wandöffnung mit gleicher Vorspannkraft. Infolge dessen kann zwischen der gekrümmten Klemmfläche des Spannkörpers und der komplementär gekrümmten Wand der Installation auch ein Dichtring mit umfänglich gleicher Materialstärke angeordnet werden, um eine umfänglich bezüglich der Wandöffnung homogene Abdichtung zwischen der Langgutdurchführung und der Wand herbeizuführen. Als Dichtringe können beispielsweise Flachdichtringe eingesetzt werden. Die vorstehend beschriebene gekrümmte Kontur der Klemmfläche des Spannkörpers ist beispielhaft für eine Vielzahl unterschiedlicher Auslegungsmöglichkeiten derselben, um diese an eine bestimmte Wandkontur anzupassen. Beispielsweise kann die Klemmfläche auch im Querschnitt V-förmig konzipiert sein, wenn sich die Wandöffnung einer Installation im Bereich einer Kante derselben befindet.

Vorteilhaft bei dieser Langgutdurchführung ist zudem ihre Querbelastbarkeit. Im Falle einer üblicherweise nicht gewünschten Querbelastbarkeit der an eine Wand einer Installation angeschlossenen Langgutdurchführung wird diese durch das zumindest eine Kraftspeicherelement gedämpft und infolge dessen nicht in vollem Maße auf die Wand der Installation übertragen, sodass auch eine unerwünschte Querbelastung der Langguteinführung nicht die Gefahr einer Beschädigung oder eines Bruches der Wand zur Folge hat.

Als Kraftspeicherelement dient typischerweise eine Druckfeder oder ein Druckfederpaket. Bereitgestellt werden kann eine solche Druckfeder als Schraubendruckfeder oder beispielsweise auch als Tellerfeder. Diese sitzen auf dem Anschlussstutzen, fassen diesen mithin umfänglich ein. Tellerfedern zeichnen sich durch eine geringe Höhe aus, um bereits hohe Vorspannkräfte zu erzielen. Um bei Vorsehen einer Tellerfeder den gewünschten translatorischen Verstellbetrag des Spannkörpers gegenüber dem Anschlussstutzen bereitzustellen, bietet es sich an, anstelle einer Tellerfeder ein Tellerfederpaket einzusetzen. Dann kann der ansonsten erforderliche Durchmesser zum Bereitstellen des benötigten Hubes geringer gehalten werden.

Bei einer solchen Langgutdurchführung ist der Spannkörper typischerweise nach Art einer Kappe mit einer Deckeldurchbrechung ausgelegt. Durch diese Durchbrechung greift der Anschlussstutzen. Durch die Deckeldurchbrechung ist ein in radialer Richtung nach innen vorspringender Flansch gebildet. Dieser dient mit seiner inneren Mantelfläche als Führungsabschnitt, mit dem der Spannkörper auf dem entsprechenden Abschnitt des Anschlussstutzens translatorisch verstell- beziehungsweise verschiebbar ist. Gebildet ist durch diesen in radialer Richtung nach innen vorspringenden Flansch spannkörperinnenseitig zugleich ein innenseitiger Stützabsatz, auf dem das zumindest eine Kraftspeicherelement mit seinem einen Ende abgestützt ist.

Zum Bereitstellen eines weiteren Widerlagers für das Kraftspeicherelement verfügt der Anschlussstutzen typischerweise mit Abstand zu dem Endabschnitt mit seinen Rastzungen über eine in radialer Richtung abragende Widerlagerstruktur. An dessen zu dem Endabschnitt mit den Rastzungen weisenden Seite als Stützfläche ist das zumindest eine Kraftfederelement mit seinem anderen Ende abgestützt.

Der Spannkörper übergreift vorzugsweise in axialer Richtung des Anschlussstutzens zumindest teilweise eine solche Widerlagerstruktur. Durch diese Maßnahme ist das zumindest eine Kraftspeicherelement innerhalb der Langgutdurchführung gekapselt, mithin nach außen durch einen Abschnitt des Spannkörpers verschlossen.

In einer vorteilhaften Weiterbildung weist die Widerlagerstruktur des Anschlussstutzens eine nicht rotationssymmetrische äußere Mantelfläche auf, ist mithin mit zumindest einer Drehmitnahmekontur ausgerüstet, beispielsweise eine Sechskant-Mantelfläche. Die innere Kontur des Spannkörpers zumindest in seinem die Widerlagerstruktur übergreifenden Abschnitt ist komplementär ausgeführt. Infolge dessen ist dann der Spannkörper drehmomentschlüssig an den Anschlussstutzen angeschlossen. Dieses erlaubt die Auslegung des Spannkörpers mit einer außenseitigen Drehmitnahmekontur, beispielsweise ebenfalls ausgeführt als Sechskantkontur. Dieses ist zweckmäßig, um ein Spannwiderlager für ein Werkzeug, beispielsweise einen Maulschlüssel, bereitzustellen, wenn ein durch den Langgutkanal des Anschlussstutzens geführtes Langgut zum Zwecke seiner Zugentlastung darin durch Spannen eines entsprechenden Stellkörpers verklemmt werden soll. Die Mantelfläche bzw. äußere Kontur der Widerlagerstruktur ist in Längserstreckung des Anschlussstutzens naturgemäß so ausgeführt, dass dieses die gewünschte Verstellbarkeit des Spannkörpers in axialer Richtung bezüglich des Anschlussstutzens nicht beeinträchtigt oder behindert. Bereitgestellt werden kann durch diese Widerlagerstruktur ein in radialer Richtung nach außen abragender Anschlagflansch, durch den die maximale Entfernung der Klemmfläche des Spannkörpers von der Widerlagerkontur der zumindest einen Rastzunge begrenzt ist.

In einem Ausführungsbeispiel ist zum Bereitstellen einer Langgutverklemmung in dem Langgutkanal als Auszugsicherung vorgesehen, dass als Klemmkörper mehrere in radialer Richtung verstellbare Klemmlamellen vorgesehen sind. Die Klemmlamellen sind an den Anschlussstutzen angeformt.. Ein Stellkörper, typischerweise als Überwurfmutter mit einer Stellschräge ausgeführt, dient zum radialen Verstellen der Klemmlamellen und damit zum Einklemmen eines den Klemmabschnitt durchgreifenden Langgutes, etwa eines Kabels. Bei einer Ausführung des Stellkörpers als Überwurfmutter kämmt deren Innengewinde ein benachbart zu den Klemmlamellen vorhandenes Außengewinde des Anschlussstutzens. Typischerweise befindet sich zwischen den Klemmlamellen und der Mantelfläche eines durch den Klemmabschnitt durchgeführten Langgutes eine Ringdichtung.

Gemäß einer anderen Ausgestaltung zum Bereitstellen einer Auszugsicherung auf ein in dem Langgutkanal befindliches Langgut, die auch unabhängig von der Art des Anschlusses des Anschlussstutzens an die Installation verwendet werden kann, ist vorgesehen, dass der zumindest eine Stellkörper auf dem Anschlussstutzen translatorisch mit einer Linearbewegung verstellbar ist. Der Stellkörper steht ebenso wie der Spannkörper unter Vorspannung, bereitgestellt durch zumindest ein Kraftspeicherelement. In einer bevorzugten Ausgestaltung handelt es sich bei diesem Kraftspeicherelement um dasjenige, durch welches auch die auf den Spannkörper wirkende Vorspannung bereitgestellt wird. Bei einer solchen Auslegung werden der Spannkörper zum Verspannen des Anschlussstutzens an der Wand einer Installationsdose und der Stellkörper zum Bereitstellen der gewünschten Auszugsicherung eines durch die Langgutdurchführung durchgeführten Langgutes voneinander wegbewegt, mithin gegeneinander gespreizt. Damit wirkt im Falle einer Realisierung des Kraftspeicherelementes als Schraubendruckfeder eine Endwindung gegen den Spannkörper und die gegenüberliegende Endwindung gegen den Stellkörper. Dieses hat zum Vorteil, dass dann beide translatorisch gegenüber dem Anschlussstutzen verstellbare Körper - der Spannkörper und der Stellkörper - unabhängig voneinander bewegt bzw. betätigt werden können und somit die Verspannung der Langgutdurchführung an der Wand einer Installation unabhängig von einer Verstellung des zumindest einen Stellkörpers zum Verklemmen eines in dem Langgutkanal befindlichen Langgutes ist.

Infolge des auf den Stellkörper wirkenden zumindest einen Kraftspeicherelementes befindet sich der zumindest eine Klemmkörper ohne eine manuelle Betätigung eines Nutzers in seiner Geschlossen-Stellung und somit in seiner in radialer Richtung maximal möglichen Klemmstellung. In dieser Stellung ist die lichte Weite im Bereich des Klemmabschnittes des Stutzens minimal. Zum Einführen eines Langgutes in den Langgutkanal des Stutzens wird der Stellkörper gegen die Rückstellkraft des zumindest einen Kraftspeicherelementes translatorisch verstellt, sodass der zumindest eine Klemmkörper in radialer Richtung nach außen hin verstellt werden kann. Ist das Langgut in den Langgutkanal des Stutzens eingeführt und positioniert, wird der Stellkörper losgelassen, sodass dieser den zumindest einen Klemmkörper in radialer Richtung nach innen verstellt, bis dass dieser an der Mantelfläche des eingeführten Langgutes anliegt. Gehalten ist der zumindest eine Klemmkörper in dieser mit Vorspannung auf die Mantelfläche des Langgutes wirkenden Stellung durch das zumindest eine Kraftspeicherelement.

Ein Einspannen bzw. Verklemmen eines in den Langgutkanal eingeführten Langgutes erfolgt bei dieser Langgutdurchführung allein durch eine translatorische Verstellbewegung des Stellkörpers. Daher ist ein Einführen und ein Verklemmen eines Langgutes in den Langgutkanal des Stutzens der Langgutdurchführung nicht nur rascher und werkzeuglos möglich, sondern beim Einrichten der Verklemmung besteht mangels Anlegens eines notwendigen Drehmomentes, wie dieses beim Stand der Technik erforderlich ist, nicht die Gefahr, dass eine Schraubverbindung, mit der der Stutzen beispielsweise an eine Installationsdose angeschlossen ist, gelockert oder gar gelöst wird.

Typischerweise verfügt ein solcher Stutzen über mehrere, in Umfangsrichtung mit Abstand zueinander angeordnete Klemmkörper. Vorzugsweise sind diese mit einem gleichen Winkelabstand in Umfangsrichtung gesehen, zueinander angeordnet. Als zweckmäßig wird das Vorsehen von drei Klemmkörpern erachtet, da dieses nicht nur ein selbsttätiges Zentrieren des in den Stutzen eingeführten Langgutes gewährleistet, sondern zudem zum Vorteil hat, dass die aus dem zumindest einen Kraftspeicherelement resultierende Klemmkraft auf nur diese geringe Anzahl an Klemmkörpern aufgeteilt wird, sodass die zur Verfügung stehende Kraft auf die Kontaktflächen zwischen jedem Klemmkörper mit der Mantelfläche des eingeklemmten Langgutes konzentriert wird. Die Klemmkörper weise in Umfangsrichtung gesehen eine Breite von typischerweise 3 bis 8 mm auf. Daher reicht eine bereits relativ geringe Vorspannung aus, um ein in dem Langgutkanal befindliches Langgut gegenüber darauf einwirkenden Auszugskräften sicher zu verklemmen. Aus diesem Grunde kann die Rückstellkraft des zumindest einen Kraftspeicherelementes ausgelegt werden, dass der Stellkörper auch ohne Weiteres manuell gegen die Rückstellkraft des zumindest einen Kraftspeicherelementes auf dem Stutzen zum Öffnen des oder der Klemmkörper translatorisch verstellt werden kann.

Gemäß einem Ausführungsbeispiel ist der zumindest eine Klemmkörper als Klemmfinger ausgeführt. Der Klemmfinger ist mit seiner Wurzel (seinem Ursprung) an den Stutzen angeformt. Damit ist der der Wurzel in Richtung der 30 Längserstreckung des Stutzens gegenüberliegende Endabschnitt in radialer Richtung verstellbar. Dieses ist aufgrund der Materialelastizität des für die Herstellung des Stutzens vorgesehenen Materials möglich. Typischerweise ist ein solches Bauteil ein Stoffspritzgussteil. In diesem Endabschnitt, der sich mit einem Abstand zu der Wurzel des Klemmfingers in Richtung zur einführseitigen Mündung des Stutzens befindet, ist an seiner in radialer Richtung nach innen weisenden Seite eine Klemmfläche vorgesehen. Zum Verklemmen eines in dem Langgutkanal befindlichen Langgutes wirkt diese ganz oder auch teilweise gegen die äußere Mantelfläche des Langgutes. Handelt es sich bei dem Langgut um ein Kabel, wird die Klemmfläche etwas in die äußere Mantelfläche eingedrückt. Typischerweise ist die Klemmfläche durch reibungserhöhende Strukturen, beispielsweise zahnförmige Vorsprünge geprägt. Bei einer solchen Auslegung des Klemmkörpers befindet sich vorzugsweise an der der Klemmfläche gegenüberliegenden radial äußeren Seite des Klemmfingers eine Stellschräge, auf die zum radialen Verstellen des Klemmfingers und zum Aufbringen der gewünschten Vorspannkraft der Stellkörper wirkt. Vorzugsweise verfügt der Stellkörper über eine zu der Stellschräge des zumindest einen Klemmfingers komplementäre Stellschräge. Dies bedeutet, dass beide Stellflächen flächig aneinander anliegen. Der Stellkörper selbst ist typischerweise nach Art einer Hülse ausgeführt. Eine solche Stellhülse ist mit einem in radialer Richtung nach innen vorspringenden Anschlag mit einer Stützfläche ausgerüstet. Gegen diese wirkt das zumindest eine Kraftspeicherelement. Die äußere Mantelfläche des Stellkörpers kann eine Betätigungskontur aufweisen, beispielsweise durch eine umlaufende Vertiefung, damit eine Langgutdurchführung nutzende Person, die den Stellkörper gegen die Rückstellkraft des zumindest einen Kraftspeicherelementes verstellen möchte, einen besseren manuellen Angriff zu Verfügung hat.

Mit Ausnahme des zumindest einen Kraftspeicherpaketes sind die übrigen Bestandteile einer solchen Langgutdurchführung typischerweise Kunststoffspritzgussteile.

Nachfolgend ist die Erfindung anhand eines Ausführungsbeispiels unter Bezugnahme auf die beigefügten Figuren beschrieben. Es zeigen:
- **Fig. 1:**: Eine Langgutdurchführung gemäß der Erfindung in einer perspektivischen Explosionsdarstellung,
- **Fig. 2:**: die Langgutdurchführung der Figur 1 mit ihren zusammengesetzten Bestandteilen,
- **Fig. 3:**: die Langgutdurchführung der vorstehenden Figuren, angeschlossen an die Wand einer Installationsdose und einem durchgeführten Kabel als Langgut,
- **Fig. 4:**: eine schematisierte Längsschnittdarstellung der montierten Langgutdurchführung der Figur 3,
- **Fig. 5:**: Eine Langgutdurchführung gemäß einem weiteren Ausführungsbeispiel der Erfindung in einer perspektivischen Explosionsdarstellung,
- **Fig. 6:**: eine perspektivische Ansicht des Stellkörpers der Langgutdurchführung der Figur 5 in einer anderen Perspektive mit Blick auf ihre einfürseitige Mündung,
- **Fig. 7:**: die Langgutdurchführung der Figur 5 mit ihren zusammengesetzten Bestandteilen im Auslieferungszustand,
- **Fig. 8:**: die Langgutdurchführung der Figur 5 mit ihren zusammengesetzten Bestandteilen nach manueller Betätigung ihres Stellkörpers,
- **Fig. 9a, 9b:**: die Langgutdurchführung der Figuren 5 bis 8 mit ihrem Stellkörper in der in Figur 8 gezeigten Stellung in einer Seitenansicht (Figur 9a) und in einem Längsschnitt (Figur 9b),
- **Fig. 10a, 10b:**: die Langgutdurchführung der Figuren 5 bis 8 mit ihrem Stellkörper in der in Figur 7 gezeigten Stellung in einer Seitenansicht (Figur 10a) und in einer Längsschnittdarstellung (Figur 10b) und
- **Fig. 11:**: die Langgutdurchführung der vorstehenden Figuren 5 bis 10 mit einem durch Verklemmung auszugsgesichert gehaltenen Kabel als Langgut in einer Längsschnittdarstellung.

Eine Langgutdurchführung 1 dient zum Einführen eines Langgutes, etwa eines elektrischen Kabels, in eine Installation, typischerweise eine Installationsdose zur Aufnahme von elektrischen und/oder elektronischen Installationskomponenten. Die Langgutdurchführung 1 umfasst einen Anschlussstutzen 2. Der Anschlussstutzen 2 verfügt über einen Endabschnitt 3 mit mehreren darin angeordneten Rastzungen 4. Die Rastzungen 4 sind in Richtung von dem freien Ende 5 dieses Endabschnittes 3 wegweisend gegenüber der übrigen Mantelfläche des Anschlussstutzens 2 ausgestellt. Die gegenüber dieser Mantelfläche der Anschlussstutzens 2 in radialer Richtung vorragenden Enden der Rastzungen 4 bilden von dem freien Ende 5 wegweisende Widerlagerflächen 6 als Widerlagerkonturen. Die Rastzungen 4 sind in radialer Richtung bezüglich des Anschlussstutzens 2 aufgrund des für die Herstellung des Anschlussstutzens 2 gewählten Kunststoffmaterials verstellbar. Die den Widerlagerflächen 6 gegenüberliegende Wurzeln der Rastzungen 4 geht über in einen Ringkörper 7. Die Rastzungen 4 sind daher an diesen Ringkörper 7 als Teil des Anschlussstutzens 2 angeformt.

Der Anschlussstutzen 2 verfügt über einen inneren, seiner Längserstreckung folgenden Durchgangskanal - einen Langgutkanal 8. Dieser ist mithin von dem Anschlussstutzen 2 eingefasst.

Mit axialem Abstand zu dem Endabschnitt 3 des Anschlussstutzens 2 ist Teil des Anschlussstutzens 2 eine Widerlagerstruktur 9. Die Widerlagerstruktur 9 ragt in radialer Richtung von der in Richtung zu dem Endabschnitt 3 angrenzenden Mantelfläche des Anschlussstutzens 2 ab und verfügt über eine äußere Mantelfläche, die als Sechskant-Kontur ausgeführt ist. Die zu dem Endabschnitt 3 weisende Seite der Widerlagerstruktur 9 dient als Stützfläche 10, an der eine Schraubendruckfeder 11 als Kraftspeicherelement mit ihrem einen Ende abgestützt ist.

Der Langgutdurchführung 1 ist ferner ein Spannkörper 12 zugeordnet. Dieser sitzt auf dem zylindrischen Abschnitt des Anschlussstutzens 2 zwischen den Rastzungen 4 und der Widerlagerstruktur 9. Der Spannkörper 12 ist nach Art einer Kappe mit einer Durchbrechung 13 ausgeführt. Die Durchbrechung 13 wird durch einen in radialer Richtung von der übrigen Innenkontur der vorspringenden Flansch 14 eingefasst. Dieser Flansch 14 bildet einen Führungsabschnitt zum Führen des Spannkörpers 12 auf der äußeren Mantelfläche des Anschlussstutzens 2. Der Durchmesser der Durchbrechung 13 ist um das notwendige Spiel für eine axiale Verstellbarkeit des Spannkörpers 12 gegenüber dem Anschlussstutzen 2 größer als der Außendurchmesser desselben. Der Flansch 14 bildet innenseitig bezüglich des Spannkörpers 12 einen Stützabsatz 15, auf dem das andere Ende der Schraubendruckfeder 11 abgestützt ist. Sind die Schraubendruckfeder 11 und der Spannkörper 12 auf dem Anschlussstutzen 2 montiert, ist die Schraubendruckfeder 11 an der Stützfläche 10 des Widerlagerkörpers 9-einerseits - und an dem Stützabsatz 15 des Spannkörpers 12 - andererseits - abgestützt. Damit wirkt der Spannkörper 12 mit seiner zu dem freien Ende 5 des Anschlussstutzens 2 weisenden Seite - seiner Klemmfläche - unter Vorspannung stehend gegen die Widerlagerflächen 6 der Rastzungen 4. Zwischengeschaltet zwischen der Klemmfläche des Spannkörpers 12 und den Widerlagerflächen 6 der Rastzungen 4 ist ein als Flachring ausgeführter Dichtring 16.

Das dem Endabschnitt 3 gegenüberliegende Ende des Anschlussstutzens 2 ist als Klemmabschnitt ausgeführt und verfügt über eine Mehrzahl an Klemmlamellen 17. Die Klemmlamellen 17 sind in radialer Richtung verstellbar, um einen in radialer Richtung wirkenden Klemmdruck auf ein in den Langgutkanal 8 eingeführtes Langgut auszuüben. Diese Verklemmung dient einer Zugentlastung des durch die Langgutdurchführung 1 hindurchgeführten Langgutes, wenn die Langgutdurchführung 1 an eine Installation angeschlossen ist. Zwischen den Klemmlamellen 17 und einem eingeführten Langgut befindet sich eine Ringdichtung 18, die innenseitig gegen die äußere Mantelfläche eines durch den Anschlussstutzen 2 hindurchgeführten Langgutes wirkt, wenn die Klemmlamellen 17 zum Verklemmen des Langgutes aktiviert sind. Die freien Enden der Klemmlamellen 17 wirken gegen die äußere Mantelfläche der Ringdichtung 18, womit diese sodann gegen die Mantelfläche eines hindurchgeführten Langgutes gepresst wird.

Zum radialen Verstellen der Klemmlamellen 17 dient eine bei dem dargestellten Ausführungsbeispiel als Überwurfmutter 19 konzipierter Stellkörper. Diese verfügt innenseitig über eine Stellschräge, die gegen die mit einer Fase versehenen Enden der Klemmlamellen 17 wirkt. Im Zuge eines Aufschraubens der Überwurfmutter 19 auf ein entsprechend komplementäres, benachbart zu den Klemmlamellen 17 angeordneten Gewindes 20 des Anschlussstutzens 2 werden diese verstellt.

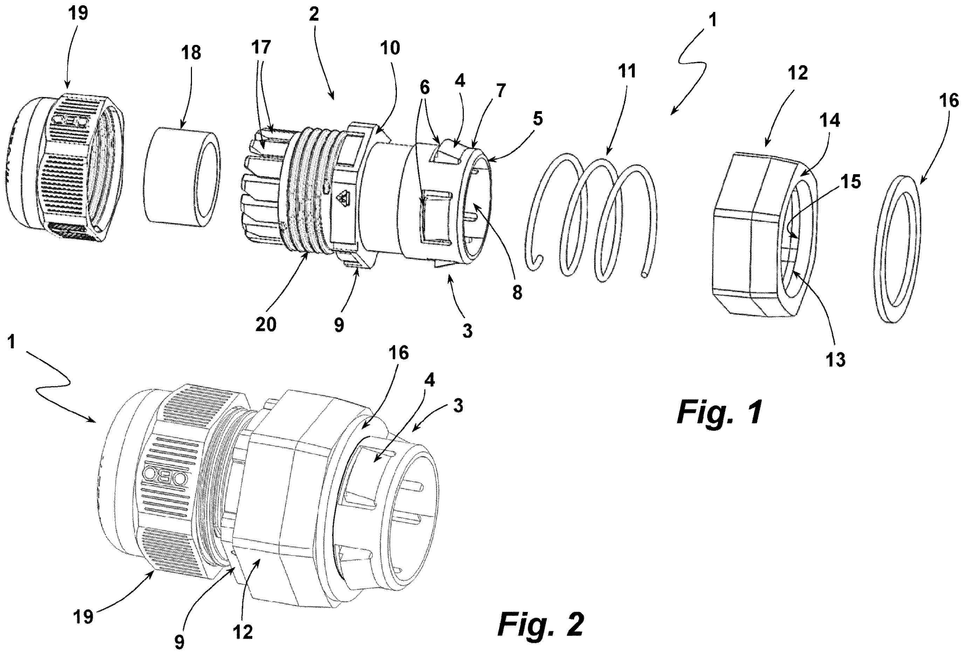

Figur 2 zeigt die Langgutdurchführung 1 in ihrem Zusammenbau und damit in ihrer Benutzungsform.

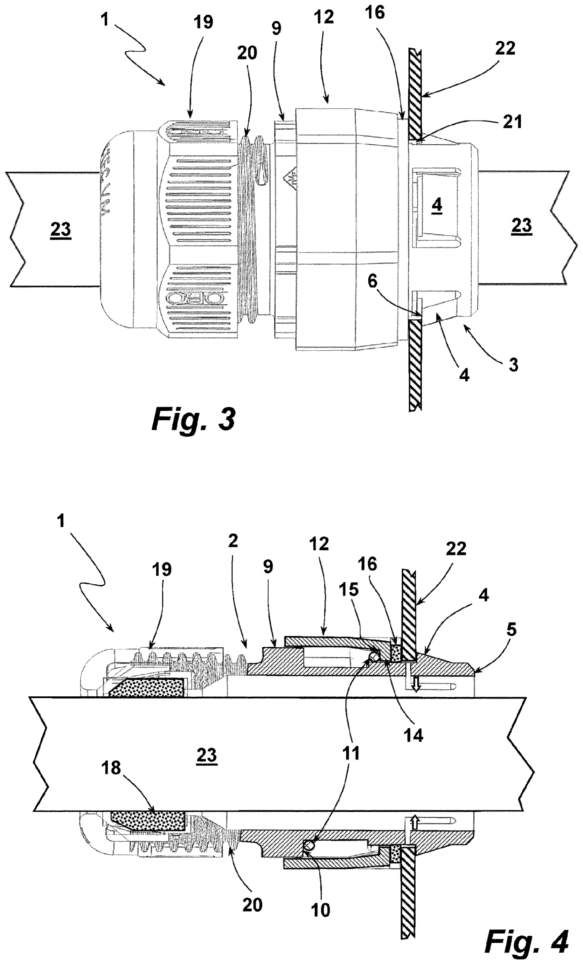

Im Zusammenhang mit einer Verwendung der Langgutdurchführung 1 zum zugentlasteten Anschließen eines Langgutes, beispielsweise eines Kabels, wird man typischerweise in einem ersten Schritt das in eine Installation einzuführende Langgut, beispielsweise das Kabel, durch den Langgutkanal 8 der Langgutdurchführung 1 beziehungsweise seines Anschlussstutzens 2 hindurchführen. Die Langgutdurchführung 1 befindet sich sodann im Endbereich des anzuschließenden Langgutes. Ist die Langgutdurchführung 1 entsprechend am Langgut positioniert, kann durch Aufschrauben der Überwurfmutter 19 das Langgut in dem Langgutkanal 8 verklemmt werden, wodurch die Langgutdurchführung 1 in längsaxialer Richtung des Langgutes kraftschlüssig an dieses angeschlossen ist. In einem nachfolgenden Schritt wird das Langgut mit der daran angeschlossenen Langgutdurchführung 1 mit seinem Endabschnitt 3 in eine vorbereitete Öffnung 21 einer Wand 22 einer Installation, beispielsweise einer Installationsdose, eingeführt. Der Durchmesser der Öffnung 21 ist kleiner als der maximale Durchmesser des Endabschnittes 3 im Bereich der ausgestellten Enden seiner Rastzungen 4. Durch dieses Einführen werden die Rastzungen 4 in radialer Richtung nach innen bewegt, sodass diese durch die Öffnung 21 hindurchpassen. Ist der Endabschnitt 3 durch die Öffnung 21 hindurchgeführt, springen die Rastzungen 4 in ihre Ausgangsstellung zurück und hintergreifen mit ihren Widerlagerflächen 6 die Wand 22 innenseitig, wie in Figur 3 dargestellt. Um ein bestimmungsgemäßes Zurückfedern der Rastzungen 4 zu gewährleisten, wird die axiale Verstellbarkeit des Spannkörpers 12 gegen die Rückstellkraft der Schraubendruckfeder 11 genutzt. Sind die Rastzungen 4 in ihre in Figur 3 gezeigte ausgestellte Verklammerungs- beziehungsweise Widerlagerstellung gebracht, ist die Langgutdurchführung 1 an der Wand 22 festgelegt. Die Spannkraft resultiert unter Zwischenschaltung des Dichtringes 16 aus der in der Schraubendruckfeder 11 gespeicherten Kraft. In Figur 3 ist das als Langgut durch die Langgutdurchführung 1 hindurch geführte Langgut ein Kabel 23. Infolge seiner kraftschlüssigen Verbindung mit der Langgutdurchführung 1 ist infolge des Hintergreifens der Wand 22 durch die Rastzungen 4 mit ihren wandinnenseitig anliegenden Widerlagerflächen 6 eine wirksame Zugentlastung bereitgestellt.

Figur 4 zeigt einen schematisierten Längsschnitt durch die an die Wand 22 der Installation angeschlossene Langgutdurchführung 1. Auch wenn bezüglich des Anschlussstutzens 2 im Bereich seines Gewindes 20 und dem übrigen Bereich eine andere Schraffierung gezeigt ist, handelt es sich hierbei um ein einziges Bauteil. Die radiale Verstellbarkeit der Rastzungen 4, damit diese durch die Öffnung 21 hindurchgeführt werden können, ist durch Blockpfeile kenntlich gemacht. Erkennbar ist in dieser Darstellung auch der Stützabsatz 15 mit der sich darauf abstützenden Schraubendruckfeder 11, die mit ihrem anderen Ende an der Stützfläche 10 der Widerlagerstruktur 9 abgestützt ist.

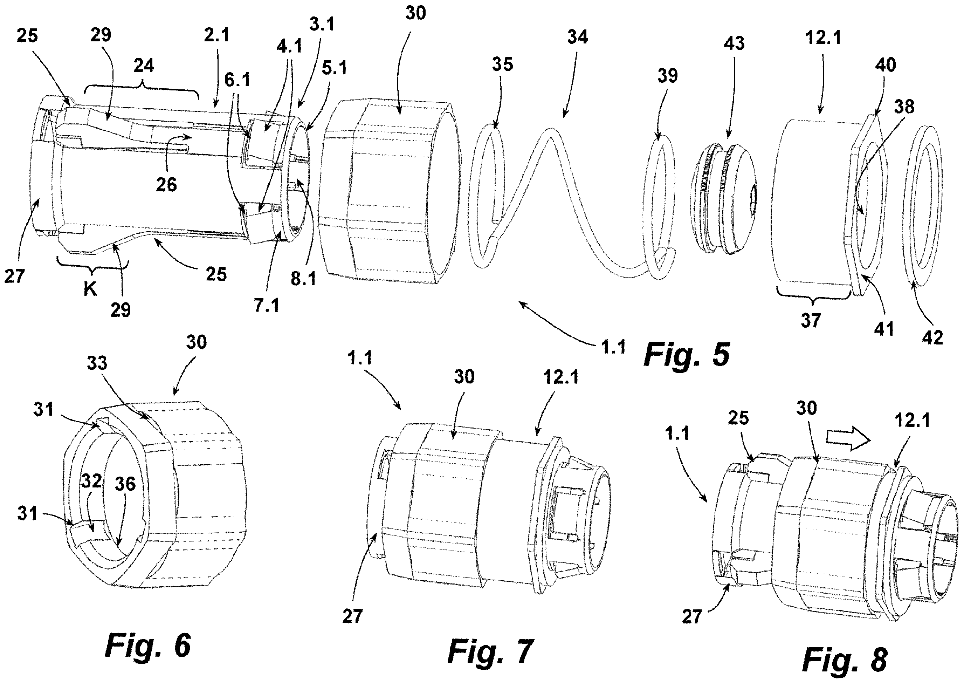

In den Figuren 5 bis 11 ist eine weitere Langgutdurchführung 1.1 gemäß der Erfindung wiedergegeben. Diese Langgutdurchführung 1.1 ist, was ihren Anschluss bzw. ihre Verspannung an einer Wand einer Installation betrifft genauso aufgebaut wie die Langgutdurchführung 1 der vorstehenden Figuren. Daher gelten diese Ausführungen auch für die Langgutdurchführung 1.1. Die Langgutdurchführung 1.1 unterscheidet sich von der Langgutdurchführung 1 durch die Art und Weise, wie ein in den Langgutkanal 8 eingeführtes Langgut darin zwecks Auszugssicherung verklemmt wird. Gleiche Bauteile der Langgutdurchführung 1.1 sind zum Teil mit denselben Bezugszeichen kenntlich gemacht wie bei der Langgutdurchführung 1, jedoch ergänzt um das Suffix ".1".

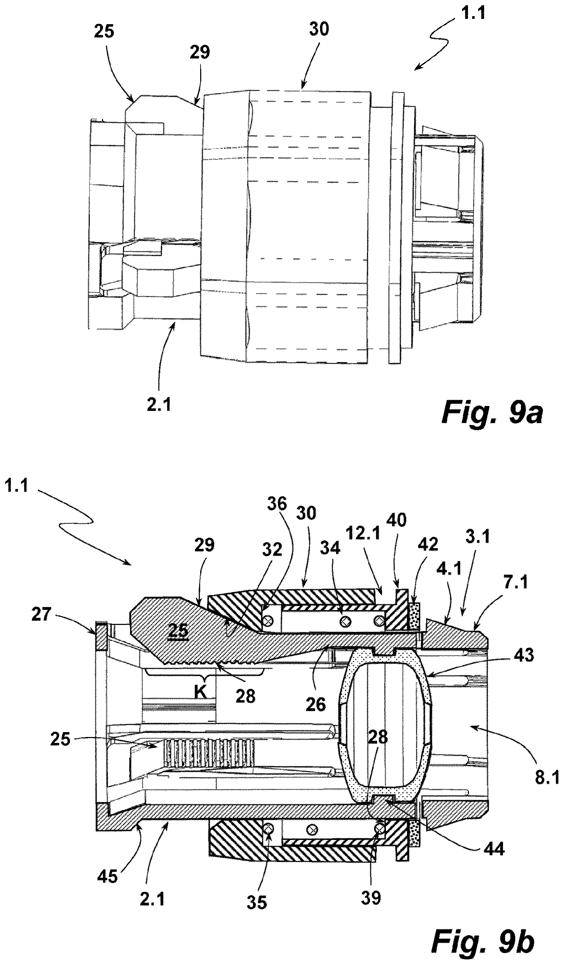

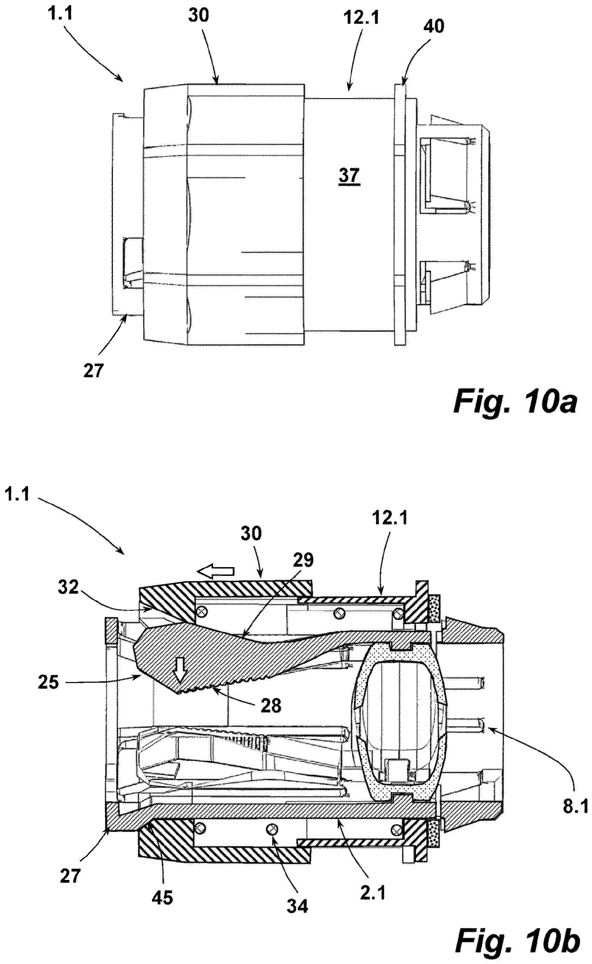

Zum Zwecke einer Verklemmung eines in den Langgutkanal 8.1 eingeführten Langgutes verfügt der Anschlussstutzen 2.1 über einen Klemmabschnitt 24. In dem Klemmabschnitt 24 sind mehrere, bei dem dargestellten Ausführungsbeispiel drei Klemmfinger 25 als Klemmkörper umfänglich mit gleichem Winkelabstand zueinander angeordnet. Die Klemmfinger 25 sind Teil des Anschlussstutzens 2.1, da diese an diesen angeformt sind. Bei dem Anschlussstutzen 2.1 handelt es sich um ein Kunststoffspritzgussteil. Der Bereich der Anformung der Klemmfinger 25 an den Anschlussstutzen 2.1 ist im Rahmen dieser Ausführungen auch als Wurzel bzw. Wurzelbereich 26 angesprochen. Die Klemmfinger 25 erstrecken sich von dem Wurzelbereich 26 in Richtung zu der einführseitigen Mündung des Anschlussstutzens 2.1, in die ein durch die Langgutdurchführung 1.1 hindurchzuführendes Langgut, beispielsweise ein elektrisches Kabel eingeführt wird. Die einführseitige Mündung wird von einem Ringkörper 27 eingefasst. Die Klemmfinger 25 sind mit Ausnahme ihres an ihrem längsaxialen Ende befindlichen Wurzelbereiches 26 durch einen Bewegungsspalt von den übrigen Bestandteilen des Anschlussstutzens 2.1 getrennt. Insofern befinden sich die Klemmfinger 25 jeweils in einer Klemmkörperausnehmung. Die Klemmfinger 25 verfügen mit Abstand von ihrem Wurzelbereich 26 jeweils über den eigentlichen Klemmkörper K auf. Der den Klemmkörper K mit dem Wurzelbereich 26 verbindende Abschnitt der Klemmfinger 25 ist infolge der Materialbeschaffenheit des Anschlussstutzens 2.1 elastisch biegbar. Der Ringkörper 27 begrenzt die Klemmkörperausnehmungen in axialer Richtung am einsetzseitigen Ende der Langgutdurchführung 1.1. Dessen in radialer Richtung nach innen weisende Fläche dient als Kontaktfläche zum Kontaktieren der Mantelfläche eines in den Langgutkanal 8.1 eingeführten Langgutes. Diese Fläche ist als Klemmfläche 28 in Figuren 9b und 10b erkennbar. Die Klemmflächen 28 tragen reibungserhöhende Strukturen, bei denen es sich bei dem dargestellten Ausführungsbeispiel um quer zur Längsachse des Langgutkanals 8.1 erstreckende Wülste handelt. In Umfangsrichtung gesehen beträgt die Breite der Klemmfläche 28 bei dem dargestellten Ausführungsbeispiel etwa 4 mm. Die Klemmkörper K der Klemmfinger 25 sind aufgrund der vor-beschriebenen Anbindung an den Stutzen in radialer Richtung verstellbar. An ihrer der Klemmfläche 28 gegenüberliegenden radialen Außenseite tragen die Klemmkörper K der Klemmfinger 25 jeweils eine Stellschräge 29.

Wenn auf die Stellschräge 29 eine in Richtung zu dem Ringkörper 27 wirkende Kraft anliegt, werden die Klemmkörper K in radialer Richtung nach innen und somit in den Langgutkanal 8.1 hinein verstellt.

Zum Verstellen der Klemmfinger 25 dient ein hülsenartig ausgeführter Stellkörper 30. Dieser umfasst den Anschlussstutzen 2.1. Wie aus der perspektivischen Ansicht des Stellkörpers 30 der Figur 6 erkennbar, verfügt der Stellkörper 30 an seinem zu dem Ringkörper 27 weisenden innenseitigen Endabschnitt über Rastfingervertiefungen 31, deren Boden als zu der Stellschräge 29 der Klemmfinger 25 komplementäre Stellschräge 32 ausgeführt ist. Durch den Eingriff der Rastfinger 25 mit dem radial äußeren Abschnitt ihrer Klemmkörper K in die Rastfingervertiefungen 31 ist der Stellkörper 30 verdrehgesichert auf dem Anschlussstutzen 2.1 gehalten. Der Stellkörper 30 ist mit einer linearen axialen Bewegung translatorisch gegenüber dem Anschlussstutzen 2.1 verstellbar.

Die radiale Außenseite des Stellkörpers 30 trägt mehrere, bei dem dargestellten Ausführungsbeispiel in Umfangsrichtung angeordnete Betätigungskonturen 33, die ein erleichtertes manuelles Ergreifen des Stellkörpers 30 erlauben, um diesen in Richtung der Längserstreckung des Anschlussstutzens 2.1 von dem Ringkörper 27 wegzubewegen.

Bei dem dargestellten Ausführungsbeispiel verfügt die Langgutdurchführung 1.1 ferner über eine Einsteckdichtung 43, hergestellt aus einem Elastomer. Diese sitzt innerhalb des Langgutkanals 8.1 und ist in diesem an einem typischerweise umlaufenden Vorsprung 44 an der Innenwand des Anschlussstutzens 2.1 in längsaxialer Richtung formschlüssig gehalten (siehe auch Figuren 9b, 10b).

Figur 7 zeigt die Langgutdurchführung 1.1 im Auslieferungszustand. Aufgrund der zwischen dem Stützabsatz 36 des Stellkörpers 30 und dem Stützabsatz 24 des Spannkörpers 22 befindlichen Schraubendruckfeder 34 werden durch diese die beiden Körper - der Stellkörper 30 und der Spannkörper 22 - voneinander weggedrückt. Hierdurch wird die notwendige Spannkraft zum Verspannen des Flansches 40 bzw. der Flachdichtung 42 an der Außenwand einer Installation ebenso bereitgestellt wie die erforderliche Klemmkraft, mit der die Klemmfinger 25 auf die Mantelfläche eines in den Langgutkanal 8.1 eingeführten Langgutes wirken. In dieser Stellung liegt die Flachdichtung 42 an den Widerlagerflächen 6.1 der Rastzungen 4.1 an und der Stellkörper 30 wirkt gegen den Ringkörper 27, der im Auslieferungszustand der Langgutdurchführung 1.1, das heißt: Bei nicht durchgeführtem Langgut, einen Anschlag für den Stellkörper 30 bereitstellt. Es versteht sich, dass die Schraubendruckfeder 34 in dieser Stellung nicht entspannt ist und somit sowohl der Stellkörper 30 als auch der Spannkörper unter Vorspannung gegen ihre jeweilige Bewegungsbegrenzung in axialer Richtung wirken.

Für eine Montage der Langgutdurchführung 1.1 an einer Installation wird der Endabschnitt 3.1 in eine vorbereitete Wandöffnung der Installation eingesteckt, bis die Rastzungen 4.1 die Wand hintergreifen. Um ein bestimmungsgemäßes Hintergreifen der Wand durch die Rastzungen 4.1 mit ihren Widerlagerflächen 6.1 zu gewährleisten, wird der Spannkörper 22 in Richtung zu dem Stellkörper 30 gegen die Kraft der Druckfeder 34 translatorisch gegenüber dem Anschlussstutzen 2.1 verstellt.

Ist die Ein- bzw. Durchführung eines Langgutes in die Langgutaufnahme 1.1 vorgesehen, wird der Stellkörper 30, wie in Figur 8 mit einem Blockpfeil kenntlich gemacht, in Richtung von dem Ringkörper 27 des Anschlussstutzens 2.1 weg und auf den Flansch 40 des Spannkörpers 22 gegen die Rückstellkraft der Druckfeder 34 verschoben. Diese Offen-Stellung der Langguteinführung 1.1 in Bezug auf die Möglichkeit eines Einführens eines Langgutes durch die einsetzseitige Mündung ist in Figur 8 gezeigt. Bei dem dargestellten Ausführungsbeispiel ist das für den Anschlussstutzen 2.1 verwendete Kunststoffmaterial mit einer gewissen Materialelastizität ausgestattet, sodass die Klemmfinger 25 selbsttätig im Zuge des Zurückschiebens des Stellkörpers 30 in radialer Richtung nach außen verstellt werden.

Der Aufbau der Langgutdurchführung 1.1 und seine Funktionsweise hinsichtlich einer Langgutverklemmung in dem Langgutkanal 8.1 ist nachfolgend an-hand der Figuren 9 bis 11 beschrieben. Die vorbeschriebe Offen-Stellung der Langgutdurchführung 1.1 ist in einem Längsschnitt in Figur 9b wiedergegeben. Der obere Klemmfinger 25 ist im Schnitt gezeigt. Ein weiterer Klemmfinger 25 ist aufgrund der Winkelbeabstandung von etwa 120 Grad in einer perspektivischen Ansicht sichtbar. Deutlich erkennbar ist das Zusammenwirken der beiden Stellschrägen 29, 32 von Klemmkörper K und Stellkörper 30. Der Stellkörper 30 wird in dieser Stellung manuell gegenüber dem Anschlussstutzen 2.1 gegen die Rückstellkraft der Schraubendruckfeder 34 gehalten.

In dieser Offen-Stellung der Klemmfinger 25 kann durch die durch den Ringkörper 27 eingefasste Mündung ein Langgut eingeschoben werden. Die in dem Anschlussstutzen 2.1 befindliche Einsteckdichtung 43 verfügt über axiale Durchbrechungen, durch die das Langgut hindurchgesteckt wird. Die Lochrandbereiche legen sich an der Mantelfläche eines im durchgesteckten Langgutes an, sodass auf diese Weise der Durchgriff abgedichtet ist.

Wird der in den Figuren 9a, 9b gegen die Rückstellkraft der Druckfeder 34 gehaltene Stellkörper 30 losgelassen, entspannt sich die Schraubendruckfeder 34, sodass der Stellkörper 30 in Richtung zu dem Ringkörper 27 des Anschlussstutzens 2.1 bewegt wird. Der Ringkörper 27 trägt an seiner zu dem Stellkörper 30 weisenden Seite einen Schräganschlag 31, gegen den die vordere Innenseite des Stellkörpers 30 zum Begrenzen der Verstellbewegung desselben mit einer komplementären Anschlagfläche anschlägt, wie aus Figur 10b erkennbar. Der Stellkörper 30 wird bei dieser Bewegung teleskopartig gegenüber dem Spannkörper 22 verstellt. Durch diese Verstellbewegung des Stellkörpers 30 (in Figur 10b durch Pfeile angedeutet), werden die Klemmkörper K der Klemmfinger 25 in radialer Richtung aufgrund des Zusammenwirkens der Stellschrägen 29 und 32 in radialer Richtung nach innen in Richtung auf ein in dem Langgutkanal 8.1 befindliches Langgut verstellt und wirken sodann auf die Mantelfläche des Langgutes.

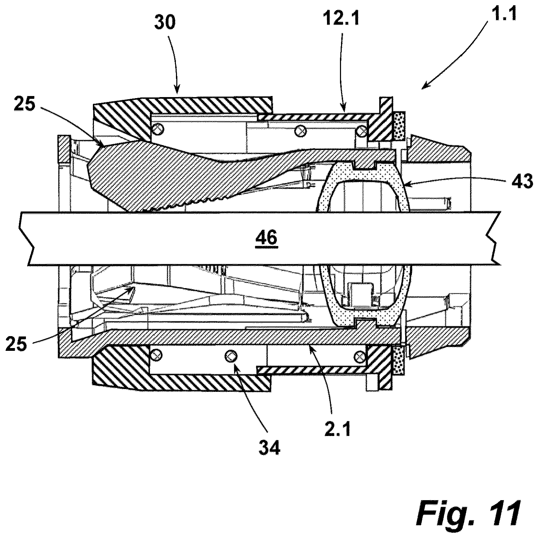

Figur 11 zeigt ein in Bezug auf die Langgutdurchführung 1.1 recht dünnes Kabel 46, welches in dieser Endposition durch die Klemmfinger 25 verklemmt 30 in den Langgutkanal 8.1 der Langgutdurchführung 1.1 fixiert ist. Die Flächen 28 sind in radialer Richtung den äußeren Mantel des Kabels 46 etwas eingedrückt. Das Kabel 46 ist damit auszugsgesichert in der Langgutdurchführung 1.1 gehalten.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, die Erfindung zu verwirklichen, ohne dass diese im Rahmen dieser Ausführungen näher erläutert werden müssten.

### Bezugszeichenliste

| | | | |
|---|---|---|---|
| 1, 1.1 | Langgutdurchführung | 31 | Rastfingervertiefung |
| 2, 2.1 | Anschlussstutzen | 32 | Stellschräge |
| 3, 3.1 | Endabschnitt | 33 | Betätigungskontur |
| 4, 4.1 | Rastzunge | 34 | Schraubendruckfeder |
| 5, 5.1 | freies Ende | 35 | Endwindung |
| 6, 6.1 | Widerlagerfläche/Widerlagerkontur | 36 | Stützabsatz |
| 7, 7.1 | Ringkörper | 37 | Führungsabschnitt |
| 8, 8.1 | Langgutkanal | 38 | Stützabsatz |
| 9 | Widerlagerstruktur | 39 | Endwindung |
| 10 | Stützfläche | 40 | Flansch |
| 11 | Kraftspeicherelement/Schraubendruckfeder | 41 | Spannfläche |
| 12, 12.1 | Spannkörper | 42 | Flachdichtung |
| 13 | Durchbrechung | 43 | Einsteckdichtung |
| 14 | Flansch | 44 | Vorsprung |
| 15 | Stützabsatz | 45 | Schräganschlag |
| 16 | Dichtring | 46 | Kabel |
| 17 | Klemmlamelle | | |
| 18 | Ringdichtung | K | Klemmkörper |
| 19 | Überwurfmutter | | |
| 20 | Gewinde | | |
| 21 | Öffnung | | |
| 22 | Wand | | |
| 23 | Kabel | | |
| 24 | Klemmabschnitt | | |
| 25 | Klemmfinger | | |
| 26 | Wurzelbereich | | |
| 27 | Ringkörper | | |
| 28 | Klemmfläche | | |
| 29 | Stellschräge | | |
| 30 | Stellkörper | | |

## Patentansprüche

1. Langgutdurchführung, insbesondere Kabeldurchführung, umfassend einen einen Langgutkanal (8, 8.1) einfassenden Anschlussstutzen (2, 2.1) mit einem durch eine Öffnung (21) einer Wand (22) einer Installation, etwa einer Installationsdose, durchsteckbaren Endabschnitt (3, 3.1), ausgerüstet mit zumindest einer Widerlagerkontur (6, 6.1), die durch zumindest eine in Richtung zu dem Spannkörper (12, 12.1) weisend ausgestellte Stirnseite einer in radialer Richtung von einem durch den Langgutkanal (8, 8.1) hindurchgeführten Langgut (23, 46) beabstandeten Rastzunge (4, 4.1) bereitgestellt ist, welche Widerlagerkontur (6, 6.1) bei durch die Wandöffnung (21) durchgestecktem Endabschnitt (3, 3.1) wandinnenseitig abgestützt ist, und umfassend Mittel zum Halten des mit der zumindest einen Widerlagerkontur (6, 6.1) seiner Rastzunge (4, 4.1) wandinnenseitig abgestützten Anschlussstutzens (2, 2.1) an der Wand (22), **dadurch gekennzeichnet, dass** auf dem Anschlussstutzen (2, 2.1) ein in Längserstreckung desselben translatorisch verstellbarer Spannkörper (12, 12.1) mit einer in Richtung zu dem freien Ende (5, 5.1) des Endabschnittes (3, 3.1) weisenden Klemmfläche sitzt, und dass die Langgutdurchführung (1, 1.1) über zumindest ein Kraftspeicherelement (11, 34) verfügt, durch das der Spannkörper (12, 12.1), unter Vorspannung stehend, bei an der Installation montierter Langgutdurchführung (1, 1.1) gegen die Wandaußenseite wirkt und gegen welche Rückstellkraft der Spannkörper (12, 12.1) translatorisch gegenüber dem Anschlussstutzen (2, 2.1) verstellbar ist.

2. Langgutdurchführung Anspruch 1, **dadurch gekennzeichnet, dass** der Endabschnitt (3, 3.1) mehrere, umfänglich mit Abstand zueinander angeordnete Rastzungen (4, 4.1) aufweist.

3. Langgutdurchführung nach einem der Ansprüche 1 oder 2, **dadurch gekennzeichnet, dass** an der zu der Widerlagerkontur (6, 6.1) der zumindest einen Rastzunge (4, 4.1) weisenden Seite des Spannkörpers (12, 12.1) ein insbesondere als Flachdichtung (42) ausgeführter Dichtring (16) angeordnet ist.

4. Langgutdurchführung nach einem der Ansprüche 1 bis 3, **dadurch gekennzeichnet, dass** als Kraftspeicherelement eine insbesondere als Schraubendruckfeder (11, 34) oder Tellerfeder ausgelegte Druckfeder oder ein aus mehreren Druckfedern, insbesondere mehreren Tellerfedern gebildetes Druckfederpaket vorgesehen ist, welche Druckfeder (11, 34) oder welches Druckfederpaket außenseitig bezüglich des Anschlussstutzens (2, 2.1) angeordnet ist.

5. Langgutdurchführung nach einem der Ansprüche 1 bis 4, **dadurch gekennzeichnet, dass** die Klemmfläche des Spannkörpers gekrümmt ausgeführt ist, und zwar komplementär zu der Wandaußenseite der Installation gekrümmt.

6. Langgutdurchführung nach einem der Ansprüche 1 bis 5, **dadurch gekennzeichnet, dass** der Spannkörper (12, 12.1) nach Art einer Kappe mit einer Deckeldurchbrechung ausgelegt ist, wobei die Deckeldurchbrechung durch einen in radialer Richtung nach innen vorspringenden Flansch (14) als Führungsabschnitt zum Führen des Spannkörpers (12, 12.1) auf dem Anschlussstutzen (2, 2.1) bereitgestellt ist und durch den Flansch (14, 40) innenseitig ein Stützabsatz (15, 24) bereitgestellt ist, auf dem das Kraftspeicherelement (11, 34) spannkörperseitig abgestützt ist.

7. Langgutdurchführung nach einem der Ansprüche 1 bis 6, **dadurch gekennzeichnet, dass** der Anschlussstutzen (2) mit axialem Abstand zu dem Endabschnitt (3) mit seinen Rastzungen (4) eine in radialer Richtung abragende Widerlagerstruktur (9) aufweist, deren zu seinem Endabschnitt (3) mit den Rastzungen (4) weisenden Seite als Stützfläche (10) ausgeführt ist, an der das Kraftspeicherelement (11) anschlussstutzenseitig abgestützt ist.

8. Langgutdurchführung nach Anspruch 7 in seinem Rückbezug auf Anspruch 6, **dadurch gekennzeichnet, dass** die Widerlagerstruktur (9) eine zumindest eine Drehmitnahmekontur aufweisende Mantelfläche aufweist, der nach Art einer Kappe ausgelegte Spannkörper (12) die Widerlagerstruktur (9) außenseitig zumindest teilweise in seiner axialen Erstreckung übergreift und zum Bereitstellen einer drehmomentschlüssigen Verbindung zwischen dem Spannkörper (12) und der Widerlagerstruktur (9) der Spannkörper (12) innenseitig eine zu der äußeren Mantelfläche der Widerlagerstruktur (9) komplementäre Kontur aufweist.

9. Langgutdurchführung nach einem der Ansprüche 1 bis 8, **dadurch gekennzeichnet, dass** die Rastzungen (4, 4.1) im Bereich ihrer Wurzel an einen das freie Ende (5, 5.1) des Anschlussstutzens (2, 2.1) bildenden Ringkörper (7, 7.1) als Teil des Anschlussstutzens (2, 2.1) angeformt sind.

10. Langgutdurchführung nach einem der Ansprüche 1 bis 9, **dadurch gekennzeichnet, dass** der Anschlussstutzen (2, 2.1) einen Klemmabschnitt mit zumindest einem in radialer Richtung verstellbaren Klemmkörper (17, K) aufweist, auf den bzw. die ein in axialer Richtung translatorisch gegenüber dem Anschlussstutzen (2, 2.1) verstellbarer Stellkörper (19, 30) mit einer zum radialen Verstellen des zumindest einen Klemmkörpers (17, K) ausgelegten und auf diesen wirkenden Stellkontur zwecks Einklemmens eines den Klemmabschnitt (24) des Anschlussstutzens (2, 2.1) durchgreifenden Langgutes (23, 46) wirkt.

11. Langgutdurchführung nach Anspruch 10, **dadurch gekennzeichnet, dass** der Anschlussstutzen mehrere als Klemmlamellen (17) ausgeführte Klemmkörper aufweist und als Stellkörper eine Überwurfmutter (19) vorgesehen ist, die mit ihrem Gewinde einen benachbart zu den Klemmlamellen (17) des Anschlussstutzens (2) angeordnetes Gewinde (20) kämmt.

12. Langgutdurchführung nach Anspruch 10, **dadurch gekennzeichnet, dass** die Langgutdurchführung (1.1) über zumindest ein an einem Stellwiderlager (38) abgestütztes Kraftspeicherelement (34) verfügt, durch das der Stellkörper (30), unter Vorspannung stehend, auf den zumindest einen Klemmkörper (K) wirkt, und dass der Stellkörper (30) in Längserstreckung des Anschlussstutzens (2.1) gegen die Rückstellkraft des zumindest einen Kraftspeicherelements (34) translatorisch verstellbar ist.

13. Langgutdurchführung nach Anspruch 12, **dadurch gekennzeichnet, dass** der zumindest eine Klemmkörper (K) Teil eines an den Anschlussstutzen (2.1) angeformten Klemmfingers (25) ist.

14. Langgutdurchführung nach Anspruch 12 oder 13, **dadurch gekennzeichnet, dass** sowohl der Spannkörper (12.1) als auch der Stellkörper (30) durch das zumindest eine Kraftspeicherelement (34) in voneinander wegweisende Richtungen unter Vorspannung gestellt sind.

15. Anordnung umfassend eine Langgutdurchführung (1, 1.1) nach einem der Ansprüche 1 bis 14 sowie eine Installationsdose, insbesondere zur Aufnahme von elektrischen/elektronischen Komponenten, **dadurch gekennzeichnet, dass** die Installationsdose eine in eine Wand (22) eingebrachte Öffnung (21) aufweist, in die die Langgutdurchführung (1, 1.1) mit ihrem Endabschnitt (3, 3.1) eingesetzt und mit der Wand (22) infolge einer durch den Stellkörper (12) auf die Wandaußenseite aufgebrachten Vorspannung unter gleichzeitiger Abstützung des Anschlussstutzens (2, 2.1) mit der Widerlagerkontur (6, 6.1) seiner zumindest einen Rastzunge (4, 4.1) auf der Wandinnenseite gehalten ist.
